Europäisches Patentamt

European Patent Office

Office européen des brevets

(19)

(11) Numéro de publication: **0 345 161**
**A1**

(12) **DEMANDE DE BREVET EUROPEEN**

(21) Numéro de dépôt: **89401505.6**

(22) Date de dépôt: **01.06.89**

(51) Int. Cl.⁴: **B 60 R 16/00**
H 01 H 13/52, H 01 H 13/08

(30) Priorité: **03.06.88 FR 8807426**

(43) Date de publication de la demande:
**06.12.89 Bulletin 89/49**

(84) Etats contractants désignés: **DE ES GB IT**

(71) Demandeur: **JAEGER**
**2, rue Baudin**
**F-92303 Levallois-Perret (FR)**

(72) Inventeur: **Lagier, Daniel**
**135, rue des Ombraies**
**F-92000 Nanterre (FR)**

(74) Mandataire: **Martin, Jean-Jacques et al**
**Cabinet REGIMBEAU 26, Avenue Kléber**
**F-75116 Paris (FR)**

(54) **Commutateur à manette pourvue d'un interrupteur à rattrapage de jeu.**

(57) La présente invention concerne un commutateur électrique comprenant une manette (10) pourvue d'un interrupteur intégré (102, 104) et d'un bouton (150) de commande de l'interrupteur, mobile à translation dans une ouverture (41) du boîtier de manette, caractérisé par le fait qu'il comprend au moins un organe élastique (180) qui sollicite le bouton de commande (150), dans sa direction de translation vers une position de repos, et des moyens formant butée (19) qui servent d'appui latéral à l'organe élastique (180) de sorte que celui-ci sollicite également le bouton de commande (150) transversalement à sa direction de translation contre un bord (43) de l'ouverture.

FIG.3

EP 0 345 161 A1

Description

# COMMUTATEUR A MANETTE POURVUE D'UN INTERRUPTEUR A RATTRAPAGE DE JEU.

La présente invention concerne le domaine des commutateurs comprenant une manette pourvue d'un interrupteur intégré.

Selon un premier aspect, la présente invention propose des moyens conçus pour éliminer quasi totalement le bruit de fonctionnement et les vibrations du bouton de commande de l'interrupteur, malgré le jeu inévitable et nécessaire de celui-ci.

A cet effet, la présente invention propose un commutateur comprenant une manette pourvue d'un interrupteur intégré et d'un bouton de commande de l'interrupteur mobile à translation dans une ouverture du boîtier de manette, caractérisé par le fait qu'il comprend au moins un organe élastique qui sollicite le bouton dans sa direction de translation vers une position de repos et des moyens formant butée qui servent d'appui latéral à l'organe élastique de sorte que celui-ci sollicite également le bouton de commande transversalement à sa direction de translation contre un bord de l'ouverture.

Par ailleurs, pour des raisons d'ergonomie et d'esthétique on tend à utiliser de nos jours de plus en plus des manettes allongées non rectilignes. Cependant, il s'avère que de telles manettes allongées non rectilignes sont difficiles à réaliser par moulage de matière plastique et rendent souvent difficiles l'intégration de l'interrupteur.

Selon un second aspect, la présente invention vient maintenant éliminer les inconvénients précités de la technique antérieure relatifs à la fabrication d'une manette allongée non rectiligne en proposant à cet effet une manette formée de trois parois longitudinales principales de sorte que la manette est ouverte sur l'une de ses faces longitudinales et, comprenant au moins sur une partie de sa longueur une série de nervures qui affleurent l'enveloppe de la face ouverte.

La face ouverte de la manette facilite l'installation des conducteurs électriques associés à l'interrupteur. Cependant, les nervures qui affleurent cette face ouverte rendent celle-ci non perceptible à l'utilisateur.

D'autres caractéristiques, buts et avantages de la présente invention apparaîtront à la lecture de la description détaillée qui va suivre, et en regard des dessins annexés donnés à titre d'exemple non limitatif et sur lesquels :

- la figure 1 représente une vue schématique latérale d'une manette de commutateur conforme à la présente invention,
- la figure 2 représente une vue d'extrémité de la même manette après suppression d'une pièce d'arrêt,
- la figure 3 représente une vue schématique en coupe de la même manette selon des plans de coupe non coplanaires référencés III-III sur la figure 2,

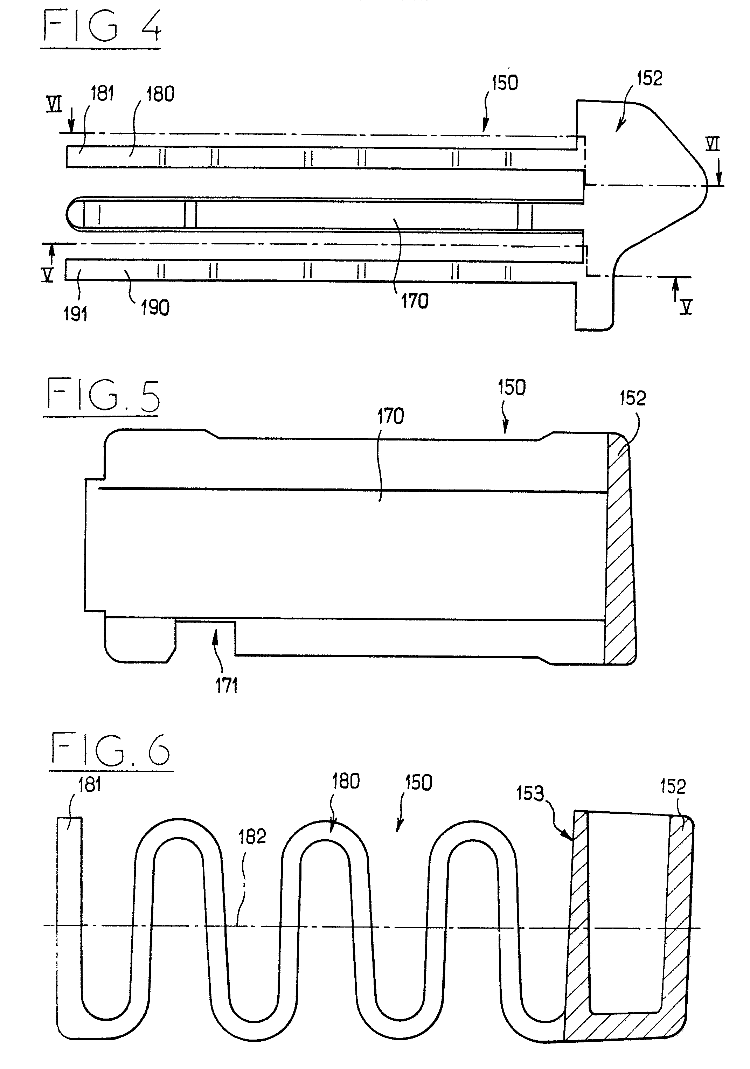

- la figure 4 représente une vue schématique latérale d'un bouton de commande conforme à la présente invention, et
- les figures 5 et 6 représentent deux vues schématiques en coupe selon des plans de coupe non coplanaires référencés V-V et VI-VI respectivement sur la figure 4.

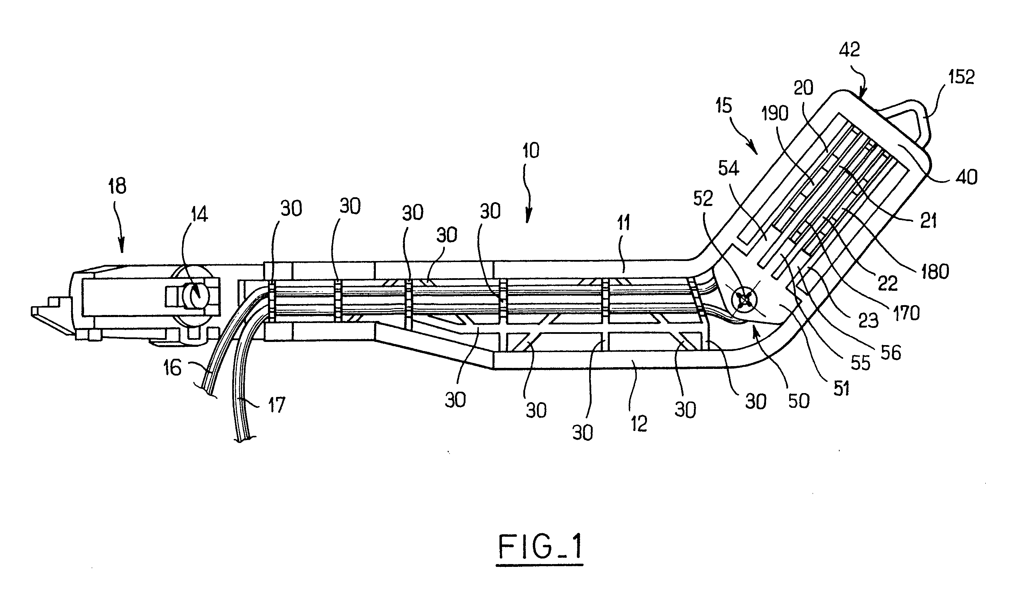

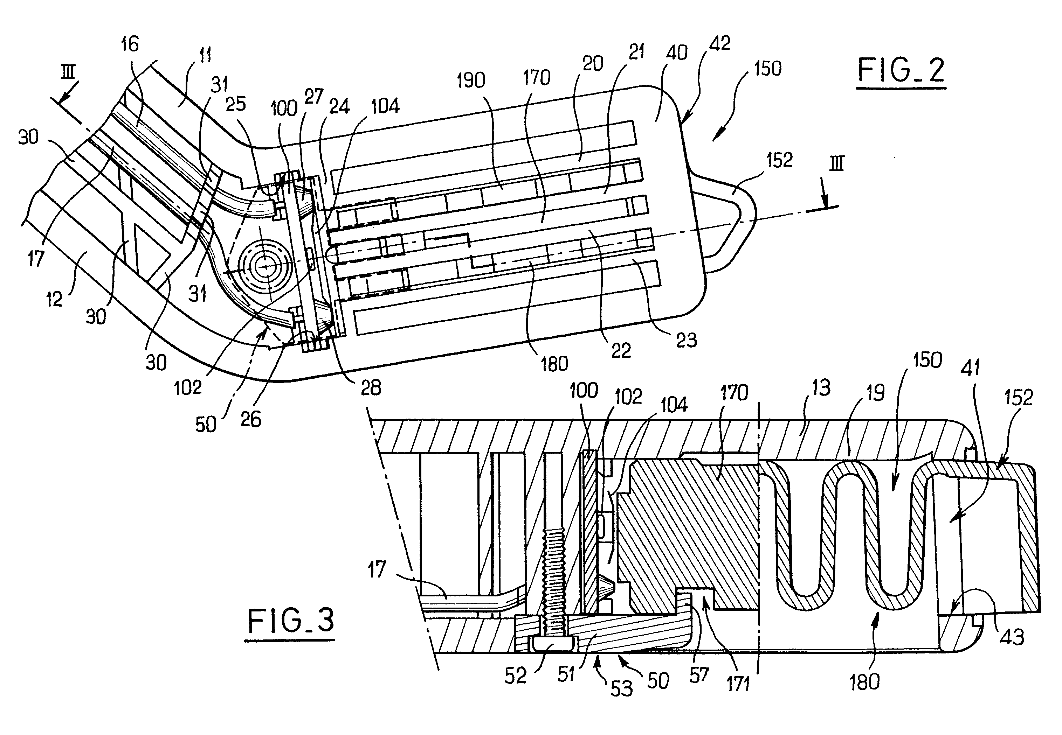

La manette 10 conforme à la présente invention comprend comme indiqué précédemment trois parois longitudinales principales. Deux de ces parois longitudinales sont visibles sur la figure 1 sous les références 1 1 et 12. Ces parois 1 1 et 12 s'étendent sensiblement perpendiculairement aux plans des figures 1 et 2.

La troisième paroi longitudinale principale 13 de la manette s'étend parallèlement aux plans des figures 1 et 2 et perpendiculairement au plan de la figure 3. Elle relie les parois 11 et 12 précitées.

On notera que les parois 11 et 12 ne sont pas planes. Il peut en être de même le cas échéant de la troisième paroi longitudinale principale 13 de la manette.

En d'autres termes, la manette 10 conforme à la présente invention est généralement allongée mais non rectiligne.

On distingue un tourillon d'articulation 14 à une première extrémité 18 de la manette.

La seconde extrémité 15 de la manette loge des moyens formant interrupteur électrique. Ceux-ci seront décrits plus en détail par la suite.

Grâce à sa structure à base de trois parois longitudinales principales, la manette 10 possède une face ouverte, visible sur la figure 1, à l'opposée de la paroi 13.

Cette face ouverte facilite l'installation de conducteurs électriques 16, 17, dans le corps de la manette. De tels conducteurs électriques 16, 17, peuvent relier les moyens interrupteurs prévus à l'extrémité 15 à un système quelconque associé, par exemple un ordinateur de bord.

Selon l'invention, la manette 10 est pourvue, entre les parois 11, 12, 13 sur une partie au moins de sa longueur de nervures 20, 21, 22, 23, qui affleurent l'enveloppe de la face ouverte de la manette. Les nervures 20, 21, 22 et 23 évitent que l'utilisateur ne ressente la présence de la face ouverte dans le corps de la manette. De préférence, les nervures 20, 21, 22 et 23 sont prévues au niveau de l'extrémité libre 15 de la manette pourvue des moyens interrupteurs.

Selon le mode de réalisation illustré sur les figures annexées, il est ainsi prévu 4 nervures 20, 21, 22, 23 affleurant l'enveloppe de la face ouverte. Le nombre de nervures illustré sur les figures annexées n'est cependant donné qu'à titre d'exemple non limitatif.

On notera par ailleurs que selon un mode de réalisation avantageux, les nervures 20, 21, 22 et 23 précitées s'étendent parallèlement à la direction longitudinale de la manette. Plus précisément elles s'étendent parallèlement aux parois longitudinales latérales 11 et 12 et perpendiculairement à la paroi 13, à partir de celle-ci.

La manette 10 comprend en outre de préférence des nervures de raidissement 30 entre ses parois 11, 12 et 13. Celles-ci s'étendent, d'une façon générale, transversalement à la direction longitudinale de la manette. Elles se distinguent des nervures 20, 21, 22 et 23 précitées par le fait qu'elles n'affleurent pas l'enveloppe de la face ouverte de la manette mais sont placées en retrait de cette enveloppe.

De préférence le bord libre des nervures de raidissement 30 est pourvu de logements conçus pour recevoir les conducteurs 16, 17. Ces logements peuvent être associés à des structures élastiques 31 afin d'assurer un maintien stable des conducteurs électriques 16, 17. Le maintien des conducteurs 16, 17 peut aussi être assuré par sertissage partiel des nervures de raidissement 30.

La manette 10 comprend également une paroi extrême transversale 40 pourvue d'une ouverture traversante 41.

Enfin, la manette 10 est munie entre les parois 11, 12, 13 et à l'extrémité des nervures 20, 21, 22 et 23 opposée à la paroi 40, d'une toile 24 qui s'étend transversalement à la direction longitudinale de la manette. De préférence le bord libre de cette toile 24 n'affleure pas l'enveloppe de la face ouverte mais est placé en retrait de celle-ci.

Selon un mode de réalisation avantageux, l'ensemble du corps de la manette 10 comprenant les parois longitudinales 11, 12, 13, le tourillon 14, les nervures 20, 21, 22, 23, les nervures 30, la paroi transversale 40 et la toile transversale 24 est réalisé d'une pièce par moulage de matière plastique. La présence de la face ouverte précitée sur le corps de la manette facilite largement les opérations de moulage malgré la structure complexe non rectiligne généralement souhaitée.

Les moyens interrupteurs comprennent une plaquette support en matériau isolant 100 qui porte un plot 102 électriquement conducteur et un élément cloquant 104 en regard de celui-ci. Le support 100 est porté par le corps de la manette 10 transversalement à la direction longitudinale de celle-ci. Le support 100 est maintenu dans des rainures 25, 26 en regard ménagées sur la face interne des parois longitudinales 11 et 12. Dans cette position, le plot 102 et l'élément cloquant 104 sont dirigés vers la paroi transversale extrême 40 de la manette. Les conducteurs 16 et 17 sont reliés électriquement par soudure en 27, 28, au plot 102 et à l'élément cloquant 104 respectivement.

Au repos, le plot 102 et l'élément 104 sont séparés. Les moyens interrupteurs sont donc ouverts. Cependant, l'élément cloquant 104, par déformation, peut venir reposer contre le plot 102 pour fermer les moyens interrupteurs suite à une sollicitation exercée par un bouton de commande 150.

Ce bouton 150 est porté par le corps de la manette 10 à l'extrémité 15 de celle-ci. Il est mobile à translation parallèlement à la direction longitudinale de la manette, c'est-à-dire parallèlement aux parois longitudinales 11, 12 et aux nervures 20 à 23. Le bouton de commande 150 émerge sur la face extérieure 42 de la paroi extrême transversale 40.

Le bouton de commande 150 est réalisé d'une pièce par moulage en matière plastique, par exemple en polyacétal.

Le bouton de commande 150 comprend une touche 152, une paroi rigide 170 et deux organes élastiques 180, 190 placés respectivement de part et d'autre de la paroi rigide.

La touche 152 est placée dans l'ouverture 42 de la manette. Elle forme la partie émergente du bouton de commande.

La paroi rigide 170 est plane et parallèle à la direction longitudinale de la manette. En d'autres termes, la paroi rigide 170 est parallèle aux parois longitudinales 11, 12 et aux nervures 20, 23.

Les organes élastiques 180, 190 sont symétriques par rapport au plan médian longitudinal de la paroi 170. Ils sont formés chacun d'une bande d'allure sinusoïdale s'étendant parallèlement à la paroi 170, c'est-à-dire également parallèlement aux parois 11, 12, et aux nervures 20 à 23. L'axe 182 des organes élastiques 180, 190, d'allure sinusoïdale s'étend parallèlement à la direction longitudinale de la manette.

La paroi 170 et les deux organes élastiques 180, 190 symétriques sont solidaires d'une face commune 153 de la touche 1 52.

Lors de l'assemblage, le bouton de commande 150 est engagé dans l'ouverture 41 de la manette. Plus précisément, la paroi rigide centrale 170 est engagée entre les nervures 21, 22. L'organe élastique 180 est engagé entre les nervures 22 et 23 et l'organe élastique 190 est engagé entre les nervures 20 et 21.

Les extrémités libres 181, 191 des organes élastiques s'appuient alors contre la toile transversale 24 précitée.

Les organes élastiques 180, 190 sollicitent par conséquent la touche 152 vers la position de repos illustrée sur les figures 1 à 3 annexées dans laquelle la touche 152 émerge largement sur la face 42 de la paroi transversale 40. Dans cette position, la paroi rigide 170 est éloignée de l'élément cloquant 104. Les moyens interrupteurs sont par conséquent ouverts.

Lorsqu'un utilisateur actionne le bouton de commande 150, c'est-à-dire sollicite la touche 152 vers l'intérieur de la manette, les organes élastiques 180, 190 sont comprimés par resserrement des ondulations qui les composent. La paroi rigide centrale 170 déforme alors l'élément cloquant 104 pour porter celui-ci en appui contre le plot central 102. Les moyens interrupteurs sont ainsi fermés.

Le bouton de commande 150 reprend sa position de repos grâce à la sollicitation élastique des organes 180, 190 et les moyens interrupteurs repassent à l'état ouvert, dès que la sollicitation du bouton de commande 150 est interrompue.

De plus selon une caractéristique importante de la présente invention, le fond des cavités recevant les organes élastiques 180, 190, formées entre les nervures 20, 21, d'une part, et 22, 23 d'autre part est conformé en butée servant d'appui latéral aux organes élastiques 180, 190. Le fond des cavités précité correspond à la face interne de la troisième paroi longitudinale 13 de la manette. Les moyens formant butée servant d'appui latéral aux organes élastiques 180, 190, apparaissent sous la référence 19 sur la figure 3.

Grâce à l'appui latéral défini par les moyens formant butée 19, les organes élastiques 180, 190 sollicitent également la touche 152 transversalement à sa direction de translation contre le bord 43 de l'ouverture 41 qui est dirigé vers les moyens formant butée 19. Ainsi, la coopération des moyens formant butée 19 et des organes élastiques 180, 190, élimine toute vibration et donc tout bruit de fonctionnement du bouton de commande 150 malgré le jeu nécessaire au déplacement de celui-ci.

Le retrait du bouton de commande 150 est interdit par une pièce d'arrêt 50. Cette pièce d'arrêt 50 comprend une plaque 51. Celle-ci est conformée pour être placée entre les parois latérales longitudinales 11, 12 de la manette et être immobilisée sur le corps de celles-ci à l'aide d'une vis 52. Dans cette position la face externe 53 de la plaque 51 affleure l'enveloppe de la face ouverte de la manette.

La plaque 51 est munie de doigts 54, 55, 56, qui s'insèrent entre les paires de nervures 20, 21, 22 et 23 comme illustré sur la figure 1. Le doigt central 55 est muni d'une saillie 57 qui pénètre dans un logement 171 ménagé sur le bord adjacent de la paroi rigide 170. Ainsi, la saillie 57 sert de butée d'arrêt à la paroi 170 et donc à l'ensemble du bouton de commande 150, à l'encontre d'un retrait comme illustré sur la figure 3. La place de la pièce d'arrêt 50 est représentée en traits interrompus sur la figure 2.

Bien entendu l'encombrement longitudinal de la saillie 57, considéré parallèlement à la direction longitudinale de la manette, doit être inférieur à la longueur du logement de réception 171 ménagé dans la paroi 1 70 pour autoriser un débattement à translation du bouton de commande 150, par rapport à la manette, en vue de l'actionnement des moyens interrupteurs.

On notera que lors de l'actionnement du bouton de commande 150 grâce au resserrement de chaque ondulation des organes élastiques 180, 190, chacun des points d'appui de ces organes élastiques 180, 190, sur les moyens formant butée 19 se déplace sur ces moyens 19 d'une amplitude inférieure à l'amplitude de déplacement total de la touche 152. Ainsi, les forces de frottement mises en jeu sont limitées.

Bien entendu la présente invention n'est pas limitée au mode de réalisation particulier qui vient d'être décrit mais s'étend à toutes variantes conformes à son esprit.

On notera en particulier que la forme générale de la manette 10 et la structure du bouton de commande 150 peuvent faire l'objet de nombreuses variantes de réalisation.

**Revendications**

1. Commutateur électrique comprenant une manette (10) pourvue d'un interrupteur intégré (102, 104) et d'un bouton (150) de commande de l'interrupteur, mobile à translation dans une ouverture (41) du boîtier de manette, caractérisé par le fait qu'il comprend au moins un organe élastique (180, 190) qui sollicite le bouton de commande (150), dans sa direction de translation vers une position de repos, et des moyens formant butée (19) qui servent d'appui latéral à l'organe élastique (180, 190) de sorte que celui-ci sollicite également le bouton de commande (150) transversalement à sa direction de translation contre un bord (43) de l'ouverture.

2. Commutateur électrique selon la revendication 1, caractérisé par le fait que l'organe élastique (180, 190) est solidaire d'une touche (152) du bouton de commande.

3. Commutateur selon l'une des revendications 1 et 2, caractérisé par le fait que le bouton de commande (150) est réalisé d'une pièce par moulage en matière plastique.

4. Commutateur selon l'une des revendications 1 à 3, caractérisé par le fait que le bouton de commande (150) comprend d'une pièce une touche (152), une paroi rigide centrale (170) et deux organes élastiques (180, 190) disposés de part et d'autre de la paroi centrale.

5. Commutateur selon la revendication 4, caractérisé par le fait que chaque organe élastique (180, 190) est formé d'une bande d'allure sinusoïdale.

6. Commutateur selon l'une des revendications 1 à 5, caractérisé par le fait que le corps de manette (10) est formé de trois parois longitudinales principales (11, 12, 13) de sorte que la manette (10) est ouverte sur l'une de ses faces longitudinales et comprend, sur une partie au moins de sa longueur une série de nervures (20, 21, 22, 23) qui affleurent l'enveloppe de la face ouverte.

7. Commutateur selon la revendication 6, caractérisé par le fait que les nervures (20, 21, 22, 23) s'étendent parallèlement à la direction longitudinale de la manette (10).

8. Commutateur selon les revendications 4 et 6 prises en combinaison, caractérisé par le fait que la paroi rigide centrale (170) et les organes élastiques (180, 190) composant le bouton de commande (150) sont placés entre des paires de nervures adjacentes (20, 21, 22, 23).

9. Commutateur selon l'une des revendications 1 à 8, caractérisé par le fait qu'un organe d'arrêt (50) interdit le retrait du bouton de commande (150).

10. Commutateur selon la revendication 9, caractérisé par le fait que l'organe d'arrêt (50) comprend une plaque (51) apte à être fixée sur le corps de la manette (10) et pourvue d'au moins un doigt (55) muni d'une saillie (57) apte à pénétrer dans un logement (171) prévu sur le bouton de commande.

11. Commutateur selon l'une des revendications 1 à 10, caractérisé par le fait que les moyens interrupteurs comprennent une plaque support en matériau électriquement isolant (100) qui porte un plot électriquement conducteur (102) et un élément cloquant (104).

FIG_1

EP 0 345 161 A1

FIG_2

FIG_3

# FIG 4

# FIG. 5

# FIG. 6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4 ) |
|---|---|---|---|
| A | DE-A-3112328 (SCHRUMPF)<br>* le document en entier *<br>--- | 1-4, 9,<br>11 | B60R16/00<br>H01H13/52<br>H01H13/08 |
| A | GB-A-2139814 (WACHNIANIN)<br>* figures 1-8 *<br>--- | 1 | |
| A | US-A-3140365 (VOLAND)<br>* figure 1 *<br>--- | 1-5 | |
| A | FR-A-1251136 (S.W.F.)<br>* page 1, colonne de droite, ligne 16- - page 2, colonne de gauche, ligne 14 *<br>* page 2, colonne de gauche, ligne 48 - colonne de droite, ligne 20 *<br>* page 2, colonne de droite, ligne 50 - page 3, colonne de droite, ligne 8 *<br>--- | 1, 6 | |
| A | US-A-4219706 (KOCH)<br>* colonne 3, ligne 3 - ligne 8 *<br>* colonne 3, ligne 29 - ligne 50 *<br>* colonne 5, ligne 62 - colonne 6, ligne 25 *<br>--- | 1, 6 | DOMAINES TECHNIQUES RECHERCHES (Int. Cl.4 ) |
| A | DE-A-2835256 (S.W.F.)<br>* page 10, ligne 10 - ligne 30 *<br>* page 17, dernier alinéa *<br>----- | 1, 6 | B60R<br>H01H |

Le présent rapport a été établi pour toutes les revendications

| Lieu de la recherche | Date d'achèvement de la recherche | Examinateur |
|---|---|---|
| LA HAYE | 29 AOUT 1989 | DESMET W.H.G. |